# EUROPEAN PATENT APPLICATION

(11) **EP 2 802 180 A1**
(43) Date of publication of application: **12.11.2014**
(21) Application number: 14151232.7
(22) Date of filing: 15.01.2014
(51) Int. Cl.: H04W 72/04, H04W 76/02

(54) **Method for controlling D2D communication and corresponding controller device and mobile device**

(30) Priority: 20.03.2013 TW 102109838; 28.06.2013 US 201313929799
(71) Applicant: Industrial Technology Research Institute, Chutung Hsinchu 31040 (TW)
(72) Inventor: Chiu, Chun-Yuan, Pingtung City Pingtung County 900 (TW); Wang, Chun-Yen, 709 Tainan City (TW)
(74) Representative: Becker Kurig Straus

(57) **Abstract**

A method for controlling device-to-device (D2D) communication includes following steps. First, radio resources for a D2D communication between a first mobile device and a second mobile device are allocated. The first mobile device is a transmitting end of the D2D communication, while the second mobile device is a receiving end of the D2D communication. A resource allocation message is transmitted through a control channel by using a D2D identification code, so that the first mobile device and the second mobile device may use the D2D identification code to search for the resource allocation message in the control channel and perform the D2D communication according to the resource allocation message. The D2D identification code is an identification code of the first mobile device or the second mobile device.

## Description

### TECHNICAL FIELD

The disclosure relates to a method for controlling device-to-device (D2D) communication, a corresponding controller device, and a mobile device.

### BACKGROUND

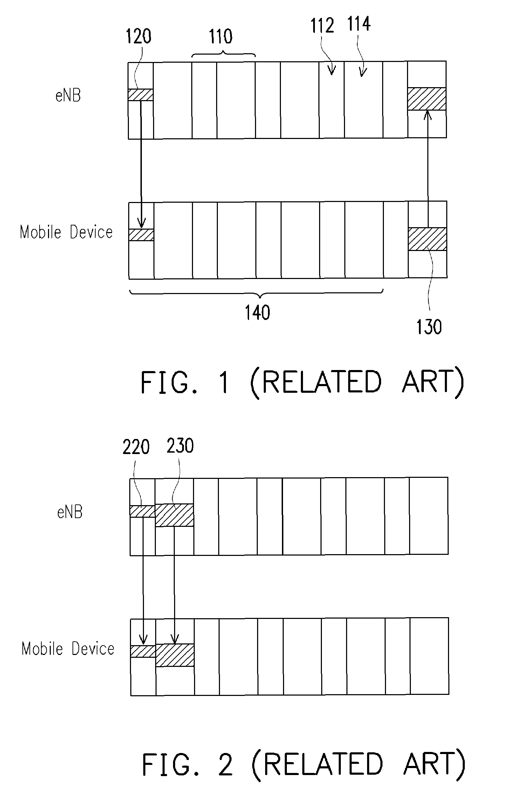

FIG. 1 is a schematic diagram illustrating an uplink data transmission performed by a mobile device in a long term evolution (LTE) frequency-division duplexing (FDD) system. In FIG. 1, five subframes (e.g., subframes 110) are depicted, and each subframe includes one physical downlink control channel (e.g., PDCCH 112) and a common channel (e.g., the common channel 114). The common channel includes a physical downlink shared channel (PDSCH) and a physical uplink shared channel (PUSCH). As exemplarily shown in FIG. 1, a base station (eNB) transmits downlink control information (DCI) 120 in the PDCCH to inform the mobile device of the fact that uplink data transmission can be performed. The DCI 120 includes a plurality of control parameters; for instance, the mobile device may be informed of performing uplink data transmission by using which radio resource under which modulation and coding scheme (MCS).

When each mobile device is connected to the eNB, the eNB allocates a cell radio network temporary identifier (C-RNTI) to the mobile device that is connected to the eNB. One PDCCH may include a plurality of DCIs which are transmitted from the eNB to different mobile devices. Through the C-RNTI of the corresponding mobile device, the eNB scrambles each DCI; accordingly, each mobile device is required to search for its own DCI from the PDCCH according to its own C-RNTI, and the search method includes steps of decoding each DCI by means of the C-RNTI of each mobile device and determining whether the decoded result is correct. If the decoded result of a DCI is correct, that DCI is the DCI transmitted to the mobile device by the eNB.

The mobile device requires a period of time to prepare uplink data 130; hence, after receiving the DCI, the mobile device has to undergo a standard processing delay 140 specified in the LTE standard and then transmit the data 130 in the PUSCH. For instance, the standard processing delay in an FDD system is four subframes, as shown by the standard processing delay 140 in FIG. 1.

FIG. 2 is a schematic diagram illustrating a downlink data reception performed by a mobile device in an LTE FDD system. When the eNB has downlink data 230 to be received by a mobile device, the eNB transmits a DCI 220 to the mobile device in the PDCCH. The DCI 220 also includes a plurality of control parameters; for instance, the mobile device may be informed of receiving the data 230 by using which radio resource. Since the mobile device does not need any preparation time for receiving data, the mobile device is able to receive the data 230 in the PDSCH in the same subframe.

The growth of mobile broadband applications and the increasing demands for bulk data transmission on mobile devices has led to the depletion of radio spectrum resource (hereinafter radio resources) allocation, and thus there is a growing trend to increase usable bandwidth in spatial domain. According to the third generation partnership project (3GPP), the feasibility of performing device-to-device (D2D) communication under a long term evolution-advanced (LTE-A) standard and the corresponding system requirements for the D2D communication have been investigated. D2D communication is a new technology in which mobile devices controlled by radio communication systems are allowed to directly communicate with each other by operating in licensed bands or by cooperating with a heterogeneous network in unlicensed bands (e.g., wireless local area networks, WLANs) after proximity discovery. D2D communication enhances spectrum efficiency of radio communication systems and reduces the transmission power of the mobile devices, thus resolving the issue of depletion of radio resource allocation to some extent. In addition to the above, the implementation of the D2D communication satisfies some communication requirements for business (e.g., promotional e-flyers) and disaster rescue applications in neighboring areas. For instance, during a disaster, the D2D communication may replace the cellular network, and the D2D-based network may be dedicated to the rescuers in order to coordinate their interventions and may provide alerts in the disaster areas.

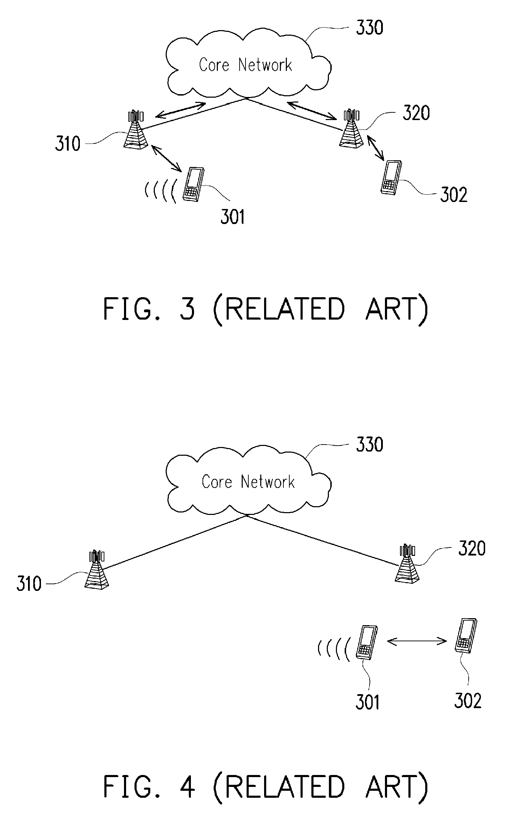

One of the application scenarios of the D2D communication is shown in FIG. 3 and FIG. 4. In FIG. 3, mobile devices 301 and 302, eNBs 310 and 320, and a core network 330 are illustrated. In the beginning, the mobile devices 301 and 302 communicate with each other through the uplink/downlink communication established by the network end (i.e., the eNBs 310 and 320 and the core network 330). As shown in FIG. 3, the mobile devices 301 and 302 are controlled by the eNBs 310 and 320, respectively. At this time, uplink data transmission and downlink data reception through the uplink/downlink communication are respectively shown in FIG. 1 and FIG. 2. When the mobile devices 301 and 302 gradually approach each other and are under the control of the same eNB 320, as illustrated in FIG. 4, the network end switches the communication between the mobile devices 301 and 302 to the D2D communication in order to alleviate the load on the serving eNBs. As the mobile devices 301 and 302 move away from each other, the network end determines that the D2D communication can no longer work and then switches the D2D communication between the mobile devices 301 and 302 back to the normal uplink/downlink communication shown in FIG. 3.

### SUMMARY

The disclosure provides a method for controlling device-to-device (D2D) communication, a corresponding controller device, and a mobile device, whereby the D2D communication can be dynamically controlled in response to the actual condition of radio link. As such, the use of radio resources may be optimized, and the limited PDCCH resources and the limited C-RNTI resources may be economized.

In an exemplary embodiment of the disclosure, a method for controlling D2D communication includes following steps. First, radio resources for a D2D communication between a first mobile device and a second mobile device are allocated. The first mobile device is a transmitting end of the D2D communication, while the second mobile device is a receiving end of the D2D communication. A resource allocation message is transmitted through a control channel by using a D2D identification code, such that the first mobile device and the second mobile device may use the D2D identification code to search for the resource allocation message in the control channel and perform the D2D communication according to the resource allocation message. The D2D identification code is an identification code (e.g., C-RNTI in LTE) of the first mobile device or an identification code of the second mobile device.

In another exemplary embodiment of the disclosure, a method for controlling D2D communication includes following steps. A resource allocation message in a control channel is searched by using a D2D identification code, and the resource allocation message is transmitted by a controller device. The D2D identification code is an identification code of the first mobile device or an identification code of the second mobile device. The first mobile device is a transmitting end of the D2D communication, while the second mobile device is a receiving end of the D2D communication. Data are directly transmitted to the second mobile device according to the resource allocation message.

In another exemplary embodiment of the disclosure, a method for controlling D2D communication includes following steps. A resource allocation message in a control channel is searched by using a D2D identification code, and the resource allocation message is transmitted by a controller device. The D2D identification code is an identification code of the first mobile device or an identification code of the second mobile device. The first mobile device is a transmitting end of the D2D communication, while the second mobile device is a receiving end of the D2D communication. Data directly transmitted from the first mobile device are received according to the resource allocation message.

In another exemplary embodiment of the disclosure, a controller device that includes a transceiver and a processor is provided. The transceiver is configured to transmit and receive radio signals. The processor is coupled to the transceiver. Besides, the processor is configured to allocate radio resources for a D2D communication between a first mobile device and a second mobile device and configured to transmit a resource allocation message through a control channel by using a D2D identification code, such that the first mobile device and the second mobile device use the D2D identification code to search for the resource allocation message in the control channel and perform the D2D communication according to the resource allocation message. The first mobile device is a transmitting end of the D2D communication, while the second mobile device is a receiving end of the D2D communication. The D2D identification code is an identification code of the first mobile device or an identification code of the second mobile device.

In another exemplary embodiment of the disclosure, a mobile device that includes a transceiver and a processor is provided. The transceiver is configured to transmit and receive radio signals. The processor is coupled to the transceiver and configured to search for a resource allocation message in a control channel by using a D2D identification code, and the resource allocation message is transmitted by a controller device. The D2D identification code is an identification code of the mobile device or an identification code of another mobile device. The mobile device is a transmitting end of the D2D communication, while another mobile device is a receiving end of the D2D communication. The processor is configured to directly transmit data to another mobile device according to the resource allocation message.

In another exemplary embodiment of the disclosure, a mobile device that includes a transceiver and a processor is provided. The transceiver is configured to transmit and receive radio signals. The processor is coupled to the transceiver and configured to search for a resource allocation message in a control channel by using a D2D identification code, and the resource allocation message is transmitted by a controller device. The D2D identification code is an identification code of the mobile device or an identification code of another mobile device. Said another mobile device is a transmitting end of the D2D communication, while the mobile device is a receiving end of the D2D communication. The processor is configured to receive data directly transmitted from said another mobile device according to the resource allocation message.

Several exemplary embodiments accompanied with figures are described in detail below to further describe the disclosure in details.

### BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the disclosure.
FIG. 1 is a schematic diagram illustrating an uplink data transmission performed by a mobile device in a conventional LTE FDD system.
FIG. 2 is a schematic diagram illustrating a downlink data reception performed by a mobile device in a conventional LTE FDD system.
FIG. 3 is a schematic diagram illustrating normal uplink/downlink communication in the context of the conventional LTE standard.
FIG. 4 is a schematic diagram illustrating D2D communication in the context of the conventional LTE standard.
FIG. 5 is a schematic diagram illustrating a method for controlling D2D communication according to an exemplary embodiment of the disclosure.
FIG. 6 is a schematic diagram illustrating a controller device and mobile devices that respectively act as a transmitting end and a receiving end according to an exemplary embodiment of the disclosure.
FIG. 7 is a schematic diagram illustrating data transmission steps of D2D communication according to an exemplary embodiment of the disclosure.
FIG. 8 is a schematic diagram illustrating data transmission steps of D2D communication according to another exemplary embodiment of the disclosure.

### DETAILED DESCRIPTION OF DISCLOSED EMBODIMENTS

One of the important issues in the context of D2D communication lies in the way to maintain quality of communication between mobile devices when the conventional uplink/downlink communication is switched to D2D communication. Under the conventional uplink/downlink communication scheme, radio link (in terms of channel quality, pathloss, timing advance, etc.) between a base station and a mobile device has to be measured. The measurement result of channel quality allows the base station to optimize the radio spectrum efficiency of the system when the base station allocates radio resources. The measurement result of pathloss enables the mobile device to calculate the transmission power required for transmitting data to the base station. Through the correction of timing advance, data transmitted by the mobile device may be received by the base station at the proper time point even after a propagation delay.

Upon completion of measurement of the radio link, the base station allocates proper radio resources to the mobile device according to the measurement result and transmits the result of the radio resource allocation and several control parameters to the mobile device through the DCI in the PDCCH, as depicted in FIG. 1 and FIG. 2. The channel condition may be rapidly varied together with time because of the changes of transmission environment, the moving speed of the mobile device, and so forth. Hence, in the LTE, the PDCCH occurs once per millisecond (ms); that is, the base station is able to dynamically and rapidly allocate the resources to the mobile device through the PDDCH in response to the varied condition of the radio link. To maintain the communication quality of the mobile device under the D2D communication scheme as well as reduce the complexity and costs of switching between different communications, a method for controlling the D2D communication is required, which is elaborated in the following exemplary embodiments of the disclosure.

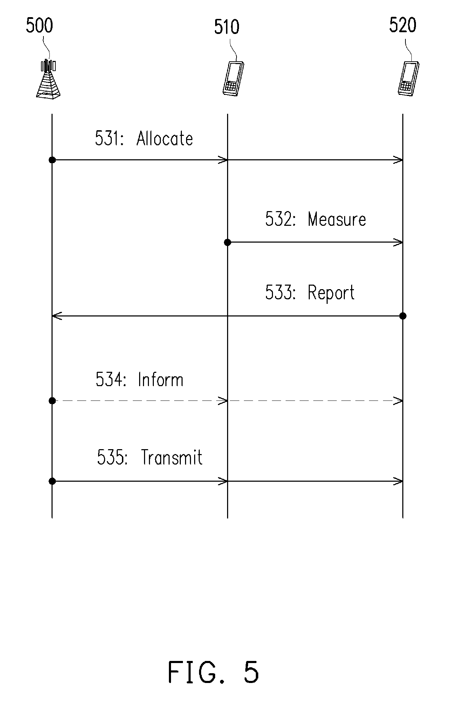

FIG. 5 is a schematic diagram illustrating a method for controlling D2D communication according to an exemplary embodiment of the disclosure. According to the present exemplary embodiment, mobile devices 510 and 520 perform D2D communication under the control of a corresponding controller device 500. The mobile device 510 is a transmitting end of the D2D communication, while the mobile device 520 is a receiving end of the D2D communication. The controller device 500 may be a base station complying with a 3GPP LTE standard, and the mobile devices 510 and 520 may be user equipments (UEs) in compliance with the LTE standard.

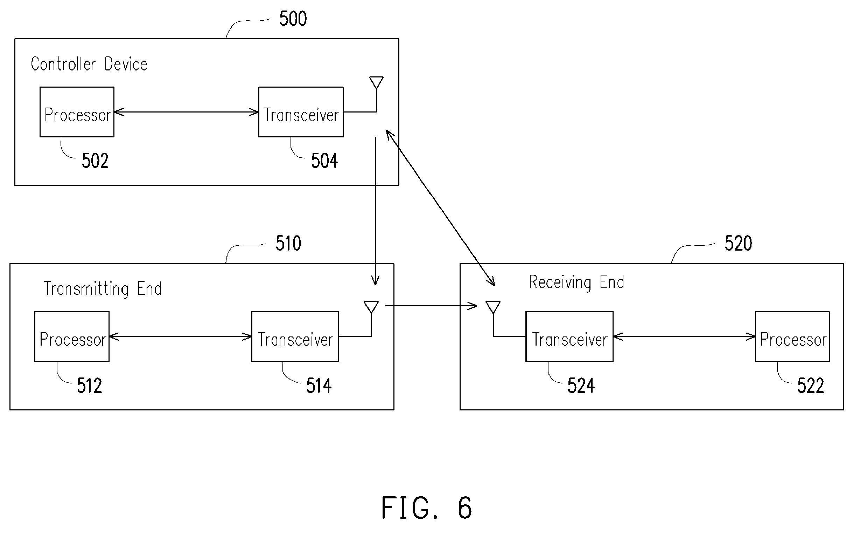

FIG. 6 is a schematic diagram illustrating the controller device 500, the mobile device 510 acting as the transmitting end, and the mobile device 520 acting as the receiving end according to an exemplary embodiment of the disclosure. The controller device 500 includes a processor 502 and a transceiver 504 that are coupled to each other. The transceiver 504 is configured to transmit and receive radio signals. The processor 502 is configured to control the actions of the controller device 500. In the following description, all of the actions of the controller device 500 are implemented by the processor 502. That is, the messages, the signals, and the data transmitted by the controller device 500 are transmitted by the processor 502 through the transceiver 504, and the messages, the signals, and the data received by the controller device 500 are received by the processor 502 through the transceiver 504.

The mobile device 510 includes a processor 512 and a transceiver 514 that are coupled to each other. The transceiver 514 is configured to transmit and receive radio signals. The processor 512 is configured to control the actions of the controller device 510. In the following description, all of the actions of the mobile device 510 are implemented by the processor 512. That is, the messages, the signals, and the data transmitted by the mobile device 510 are transmitted by the processor 512 through the transceiver 514, and the messages, the signals, and the data received by the mobile device 510 are received by the processor 512 through the transceiver 514.

The mobile device 520 includes a processor 522 and a transceiver 524 that are coupled to each other. The transceiver 524 is configured to transmit and receive radio signals. The processor 522 is configured to control the actions of the controller device 520. In the following description, all of the actions of the mobile device 520 are implemented by the processor 522. That is, the messages, the signals, and the data transmitted by the mobile device 520 are transmitted by the processor 522 through the transceiver 524, and the messages, the signals, and the data received by the mobile device 520 are received by the processor 522 through the transceiver 524.

In FIG. 5, the method for controlling D2D communication described in the present exemplary embodiment includes steps 531-535, and the steps 531 and 532 collectively refer to one measurement process. To perform the method for controlling the D2D communication described in the present exemplary embodiment, the controller device 500 may activate the measurement process if receiving a request from the mobile device 510 or the mobile device 520 for establishing the D2D communication or if determining the mobile devices 510 and 520 comply with a predetermined condition. The predetermined condition may include: both the mobile devices 510 and 520 must perform the normal uplink/downlink communication through a core network under the control of the controller device 500, and the distance between the mobile devices 510 and 520 must be short enough for performing the D2D communication.

The following illustrates the detailed method for controlling the D2D communication in the present exemplary embodiment. In step 531, the controller device 500 allocates measurement information to the mobile devices 510 and 520, and the mobile devices 510 and 520 receive the measurement information. The controller device 500 may allocate said measurement information by way of a control message, such as a radio resource control (RRC) message in LTE. The measurement information may include a reference signal, e.g., a sounding reference signal (SRS) defined by the LTE standard.

Besides, the measurement information may include a D2D identification code through which the mobile devices 510 and 520 are able to search for the resource allocation message for the D2D communication between the mobile devices 510 and 520. Here, the resource allocation message is transmitted by the controller device 500, and the resource allocation message may refer to DCI in the LTE.

The measurement information may also include transmission power of the reference signal. Alternatively, the transmission power of the reference signal is not included in the measurement information and is preset in the mobile devices 510 and 520.

In step 532, the mobile device 510 transmits the reference signal to the mobile device 520 according to the measurement information. Particularly, the mobile device 510 transmits the reference signal to the mobile device 520 at said transmission power. In the step 532, the mobile device 520 receives the reference signal transmitted from the mobile device 510 according to the measurement information and determines the measurement result of the measurement process according to the received reference signal.

The measurement result may include channel quality, pathloss, and timing advance between the mobile devices 510 and 520. The mobile device 520 may compare the received reference signal with the reference signal in the measurement information allocated by the controller device 500, so as to measure the channel quality. The mobile device 520 may also compare the power of the received reference signal with the transmission power included in the measurement information or present in the mobile device, so as to measure the pathloss. The way to measure said timing advance may refer to the way to measure the timing advance between the base station and the mobile device complying with the LTE standard.

In step 533, the mobile device reports the measurement result to the controller device 500, and the controller device 500 receives the measurement result reported by the mobile device 520. The mobile device 520 may report said measurement result by way of a control message (such as an RRC message in LTE).

In step 534, the controller device 500 transmits a control message (such as an RRC message in LTE) to inform the mobile devices 510 and 520 that the controller device 500 is about to transmit the resource allocation message; the mobile devices 510 and 520 receive the control message. The resource allocation message may refer to DCI in the LTE. The D2D identification code may be transmitted to the mobile devices 510 and 520 by way of the control message in the step 531 or 534.

Before the controller device 500 transmits the resource allocation message, the controller device 500 is required to establish the D2D communication between the mobile devices 510 and 520. The time of establishing the D2D communication is determined according to the measurement result reported by the mobile device 520 in the step 533 and the scheduling of the controller device 500. The step 534 is performed to prevent the mobile devices 510 and 520 from searching for the resource allocation message in vain while the establishment of the D2D communication requires significant time. If the establishment of the D2D communication does not require significant time, and the measurement information used in the step 531 already includes the D2D identification code, the step S534 may be omitted.

In step 535, the controller device 500 allocates radio resources for the D2D communication between the mobile devices 510 and 520 and transmits a resource allocation message through a control channel by using the D2D identification code, such that the mobile devices 510 and 520 use the D2D identification code to search for the resource allocation message in the control channel. The mobile device 510 transmits data to the mobile device 520 according to the resource allocation message, so as to perform the D2D communication. According to the measurement result reported by the mobile device 520 in the step 533, the controller device 500 determines the radio resources allocated according to the resource allocation message. The control channel may be the PDCCH under the LTE standard, and the resource allocation message may refer to DCI in the LTE.

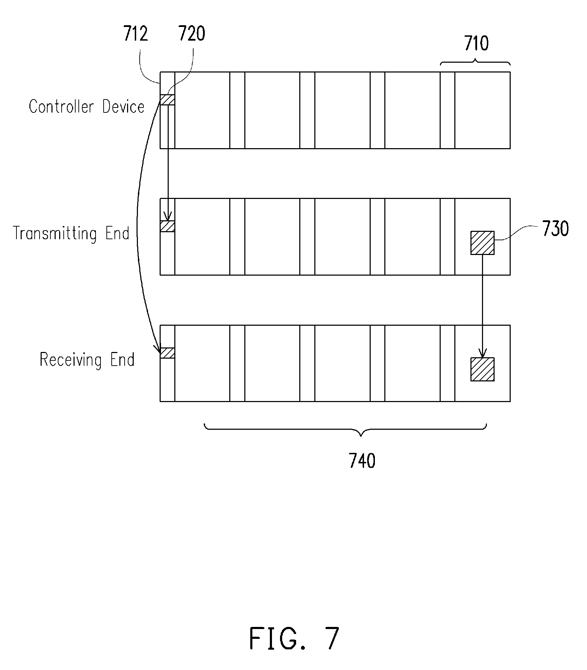

FIG. 7 is a schematic diagram illustrating the step 535 according to an exemplary embodiment of the disclosure. In FIG. 7, the transmitting end is the mobile device 510, and the receiving end is the mobile device 520. Besides, in FIG. 7, five subframes (e.g., subframes 710) are depicted. Under the conventional uplink/downlink communication scheme, the base station employs two DCIs to transmit the control parameters of the data transmitting end and the data receiving end; in the present exemplary embodiment, the controller device 500 merely employs one resource allocation message 720 to transmit the control parameters of the transmitting and receiving ends 510 and 520.

As described above, the mobile devices 510 and 520 are able to obtain the D2D identification code from the control message in the step 531 or 534. This D2D identification code is determined by the controller device 500. Here, the D2D identification code may be the identification code of the mobile device 510 or 520; alternatively, the D2D identification code may be additionally allocated for performing the D2D communication. The identification code of the mobile device 510, the identification code of the mobile device 520, and the D2D identification code may all be the C-RNTI in the LTE. Similar to the mobile devices of FIG. 1 and FIG. 2 which use the C-RNTI to search for the DCI in the PDCCH, the mobile devices 510 and 520 use the D2D identification code to search for the resource allocation message 720 in the control channel 712. Here, the resource allocation message 720 is transmitted by the controller device 500.

The mobile devices 510 and 520 are not only able to perform the D2D communication with each other but also capable of performing the normal uplink/downlink communication with the base station 500. In this case, the mobile devices 510 and 520 are required to search for the resource allocation message in the control channel for performing the D2D communication as well as search for the resource allocation message for performing the normal uplink/downlink communication.

If the D2D identification code is the identification code of the mobile device 510, the mobile device 510 only needs to search for the resource allocation message with use of its own identification code, while the mobile device 520 is required to search for the resource allocation message with use of its own identification code and the D2D identification code. In order for the mobile devices 510 and 520 to distinguish the resource allocation message for the D2D communication from the resource allocation message for the normal uplink/downlink communication, the resource allocation message transmitted by the controller device 500 may include an indicator indicating that the resource allocation message refers to resource allocation for the D2D communication or resource allocation for the normal uplink/downlink communication.

If the D2D identification code is the identification code of the mobile device 520, the mobile device 510 needs to search for the resource allocation message with use of its own identification code and the D2D identification code, while the mobile device 520 is merely required to search for the resource allocation message with use of its own identification code. In order for the mobile devices 510 and 520 to distinguish the resource allocation message for the D2D communication from the resource allocation message for the normal uplink/downlink communication, the resource allocation message transmitted by the controller device 500 may include an indicator indicating that the resource allocation message refers to resource allocation for the D2D communication or resource allocation for the normal uplink/downlink communication.

If the D2D identification code is an additionally allocated identification code, the mobile device 510 needs to search for the resource allocation message with use of its own identification code and the D2D identification code, and so does the mobile device 520. In this case, however, the resource allocation message transmitted by the controller device 500 is not required to include the indicator.

As shown in FIG. 7, after the resource allocation message 720 for the D2D communication is searched, the mobile device 510 does not transmit data 730 through the controller device 720 but directly transmits the data 730 to the mobile device 520 according to the resource allocation message 720. The resource allocation message 720 includes a plurality of control parameters; for instance, the mobile device 510 may be informed of transmitting the data 730 by using which radio resource under which modulation and coding scheme (MCS). The control parameters may include the timing advance and the pathloss measured by the mobile device 520 in the step 532. According to these control parameters, the mobile device 510 is able to directly transmit the data 730 to the mobile device 520. Besides, the mobile device 510 is able to calculate the transmission power required for transmitting the data 730 according to the pathloss.

Alternatively, the resource allocation message 720 may not include the pathloss but directly include the transmission power. Under the circumstances, the transmission power is calculated by the controller device 500 according to the pathloss. The pathloss and the transmission power may be collectively referred to as the power parameter.

The mobile device 520 is able to receive the data 730 directly transmitted from the mobile device 510 according to the control parameters in the resource allocation message 720. The exemplary embodiment shown in FIG. 7 is implemented in the LTE system. Therefore, when the mobile device 520 learns that the resource allocation message 720 indicates performing D2D communication, the mobile device 520 must wait for a standard processing delay 740 of the mobile device 510 and then receive the data 730 directly transmitted from the mobile device 510 according to the resource allocation message 720.

If said D2D identification code is the identification code of the mobile device 510 or 520, it is likely to include the indicator in the resource allocation message; besides, an implied indicating method may also be applied. For instance, the radio resources allocated in the resource allocation message for the D2D communication may be determined to be the radio resources in an uplink subframe or in an uplink frequency band. Thereby, when the resource allocation message requires the mobile device 520 to receive data from the radio resources in a downlink subframe or in a downlink frequency band, the resource allocation message instructs the mobile device 520 to perform normal downlink communication; thus, the mobile device 520 performs the normal downlink communication according to the instruction. When the resource allocation message requires the mobile device 520 to receive data from the radio resources in the uplink subframe or in the uplink frequency band, the resource allocation message instructs the mobile device 520 to perform the D2D communication; thus, the mobile device 520 performs the D2D communication according to the instruction.

According to a result obtained by comparing FIG. 7 with FIG. 2, the mobile device 520 needs to wait for the standard processing delay 740 of the mobile device 510 to receive data in the event of performing the D2D communication, while the mobile device 520 is not required to wait for any processing delay to receive data while performing the normal uplink/downlink communication. That is why the mobile device 520 described in the exemplary embodiment shown in FIG. 7 is required to distinguish the resource allocation message for the D2D communication from the resource allocation message for the normal uplink/downlink communication. Besides, according to a result obtained by comparing FIG. 7 with FIG. 1, the mobile device 510 needs to wait for the standard processing delay 740 to transmit data when performing both the D2D communication and the normal uplink/downlink communication. So the mobile device 510 described in the exemplary embodiment shown in FIG. 7 may not have to distinguish the resource allocation message for the D2D communication from the resource allocation message for the normal uplink/downlink communication.

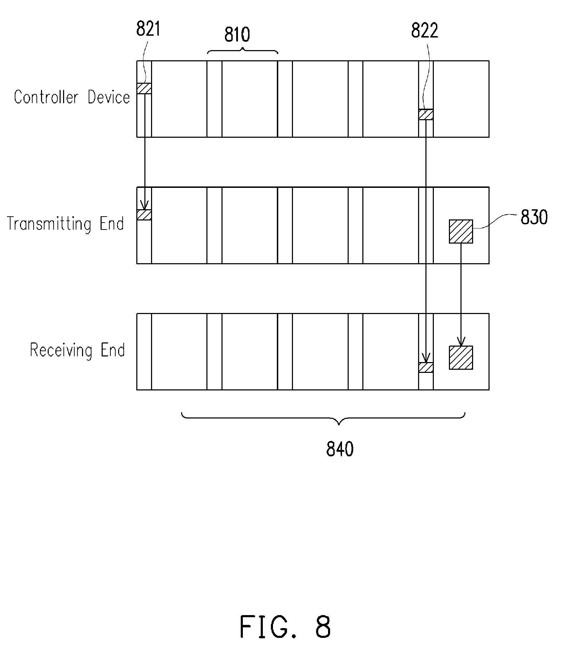

FIG. 8 is a schematic diagram illustrating the step 535 according to another exemplary embodiment of the disclosure. In FIG. 8, five subframes (e.g., subframes 810) are depicted. The controller device 500 provided in the present exemplary embodiment uses the identification code of the mobile device 510 to transmit the resource allocation message 821 to the mobile device 510. After undergoing the standard processing delay 840 of the mobile device 510, the controller device 500 uses the identification code of the mobile device 520 to transmit the resource allocation message 822 to the mobile device 520. In the last subframe, the mobile device 510 directly transmits the data 830 to the mobile device 520. In the present exemplary embodiment, no additional identification code is required for performing the D2D communication, no indicator is required to be configured in the resource allocation message, and neither the mobile device 510 nor the mobile device 520 is required to distinguish the resource allocation message for the D2D communication from the resource allocation message for the normal uplink/downlink communication.

To sum up, the disclosure provides a method for controlling the D2D communication, a corresponding controller device, and a mobile device, whereby the D2D communication can be dynamically controlled in response to the actual condition of radio link. As such, the use of radio resources may be optimized. Moreover, the exemplary embodiment of the disclosure is capable of achieving resource grant for D2D communication by using only the identification codes of the mobile devices themselves and only one resource allocation message. Thereby, the identification code resources and the radio resources of the control channel are economized.

## Claims

1. A method for controlling device-to-device communication, the method comprising:
allocating radio resources for a device-to-device communication between a first mobile device (510) and a second mobile device (520), wherein the first mobile device (510) is a transmitting end of the device-to-device communication, and the second mobile device (520) is a receiving end of the device-to-device communication; and
transmitting a resource allocation message (720) through a control channel (712) by using a device-to-device identification code, such that the first mobile device (510) and the second mobile device (520) use the device-to-device identification code to search for the resource allocation message (720) in the control channel (712) and perform the device-to-device communication according to the resource allocation message (720), wherein the device-to-device identification code is an identification code of the first mobile device (510) or an identification code of the second mobile device (520).

2. The method as recited in claim 1, wherein the resource allocation message (720) comprises an indicator indicating that the resource allocation message (720) refers to resource allocation for the device-to-device communication or for normal uplink/downlink communication.

3. The method as recited in claim 1, wherein when the resource allocation message (720) requires the second mobile device (520) to receive data (730) from the radio resources in a downlink subframe or in a downlink frequency band, the resource allocation message (720) instructs the second mobile device (520) to perform normal downlink communication, and when the resource allocation message (720) requires the second mobile device (520) to receive the data (730) from the radio resources in an uplink subframe or in an uplink frequency band, the resource allocation message (720) instructs the second mobile device (520) to perform the device-to-device communication.

4. The method as recited in claim 1, wherein the radio resources allocated according to the resource allocation message (720) are determined according to a measurement result obtained through performing a measurement process.

5. The method as recited in claim 4, wherein the measurement process comprises:
allocating measurement information comprising a reference signal to the first mobile device (510) and the second mobile device (520), such that the first mobile device (510) transmits the reference signal to the second mobile device (520) according to the measurement information, and that the second mobile device (520) receives the reference signal according to the measurement information and determines the measurement result according to the received reference signal, wherein the measurement result comprises channel quality, pathloss, and timing advance between the first and second mobile devices (510, 520); and
receiving the measurement result reported by the second mobile device (520).

6. The method as recited in claim 5, wherein the measurement information further comprises the device-to-device identification code.

7. The method as recited in claim 1, further comprising:
before transmitting the resource allocation message (720), transmitting a control message to inform the first and second mobile devices (510, 520) that the resource allocation message (720) is about to be transmitted.

8. The method as recited in claim 7, wherein the control message further comprises the device-to-device identification code.

9. A method for controlling device-to-device communication, the method comprising:
searching for a resource allocation message (720) in a control channel (712) by using a device-to-device identification code, wherein the resource allocation message (720) is transmitted by a controller device (500), the device-to-device identification code is an identification code of a first mobile device (510) or an identification code of a second mobile device (520), the first mobile device (510) is a transmitting end of a device-to-device communication, and the second mobile device (520) is a receiving end of the device-to-device communication; and
directly transmitting data (730) to the second mobile device (520) according to the resource allocation message (720).

10. The method as recited in claim 9, wherein the resource allocation message (720) comprises an indicator indicating that the resource allocation message (720) refers to resource allocation for the device-to-device communication or for normal uplink/downlink communication.

11. The method as recited in claim 9, wherein radio resources allocated according to the resource allocation message (720) are determined according to a measurement result obtained through performing a measurement process.

12. The method as recited in claim 11, wherein the measurement process comprises:
receiving measurement information allocated by the controller device (500), wherein the measurement information comprises a reference signal; and
transmitting the reference signal to the second mobile device (520) according to the measurement information, so as to measure channel quality, pathloss, and timing advance between the first and second mobile devices (510, 520).

13. The method as recited in claim 12, wherein the measurement information further comprises the device-to-device identification code.

14. The method as recited in claim 9, further comprising:
before receiving the resource allocation message (720), receiving a control message transmitted by the controller device (500), the control message indicating that the controller device (500) is about to transmit the resource allocation message (720).

15. The method as recited in claim 14, wherein the control message further comprises the device-to-device identification code.

16. A method for controlling device-to-device communication, the method comprising:
searching for a resource allocation message (720) in a control channel (712) by using a device-to-device identification code, wherein the resource allocation message (720) is transmitted by a controller device (500), the device-to-device identification code is an identification code of a first mobile device (510) or an identification code of a second mobile device (520), the first mobile device (510) is a transmitting end of a device-to-device communication, and the second mobile device (520) is a receiving end of the device-to-device communication; and
receiving data (730) directly transmitted from the first mobile device (510) according to the resource allocation message (720).

17. The method as recited in claim 16, wherein the resource allocation message (720) comprises an indicator indicating that the resource allocation message (720) refers to resource allocation for the device-to-device communication or for normal uplink/downlink communication.

18. The method as recited in claim 16, further comprising:
when the resource allocation message (720) requires the data (730) to be received from radio resources in a downlink subframe or in a downlink frequency band, performing normal downlink communication; and
when the resource allocation message (720) requires the data (730) to be received from radio resources in an uplink subframe or in an uplink frequency band, performing the device-to-device communication.

19. The method as recited in claim 16, wherein radio resources allocated according to the resource allocation message (720) are determined according to a measurement result obtained through performing a measurement process.

20. The method as recited in claim 19, wherein the measurement process comprises:
receiving measurement information allocated by the controller device (500), wherein the measurement information comprises a reference signal;
receiving the reference signal transmitted from the first mobile device (510) according to the measurement information;
determining the measurement result according to the received reference signal, wherein the measurement result comprises channel quality, pathloss, and timing advance between the first and second mobile devices (510, 520); and
reporting the measurement result to the controller device (500).

21. The method as recited in claim 20, wherein the measurement information further comprises the device-to-device identification code.

22. The method as recited in claim 16, further comprising:
before receiving the resource allocation message (720), receiving a control message transmitted by the controller device (500), the control message indicating that the controller device (500) is about to transmit the resource allocation message (720).

23. The method as recited in claim 22, wherein the control message further comprises the device-to-device identification code.

24. The method as recited in claim 16, further comprising:
if observing that the resource allocation message (720) indicates implementation of the device-to-device communication, waiting for a standard processing delay (740) of the first mobile device (510) and then receiving the data (730) directly transmitted from the first mobile device (510) according to the resource allocation message (720).

25. A controller device (500) comprising:
a transceiver (504) configured to transmit and receive radio signals; and
a processor (502) coupled to the transceiver (504), the processor (502) being configured to allocate radio resources for a device-to-device communication between a first mobile device (510) and a second mobile device (520) and configured to transmit a resource allocation message (720) through a control channel (712) by using a device-to-device identification code, such that the first mobile device (510) and the second mobile device (520) use the device-to-device identification code to search for the resource allocation message (720) in the control channel (712) and perform the device-to-device communication according to the resource allocation message (720), wherein the first mobile device (510) is a transmitting end of the device-to-device communication, the second mobile device (520) is a receiving end of the device-to-device communication, and the device-to-device identification code is an identification code of the first mobile device (510) or an identification code of the second mobile device (520).

26. The controller device (500) as recited in claim 25, wherein the resource allocation message (720) comprises an indicator indicating that the resource allocation message (720) refers to resource allocation for the device-to-device communication or for normal uplink/downlink communication.

27. The controller device (500) as recited in claim 25, wherein when the resource allocation message (720) requires the second mobile device (520) to receive data (730) from the radio resources in a downlink subframe or in a downlink frequency band, the resource allocation message (720) instructs the second mobile device (520) to perform normal downlink communication, and when the resource allocation message (720) requires the second mobile device (520) to receive the data (730) from the radio resources in an uplink subframe or in an uplink frequency band, the resource allocation message (720) instructs the second mobile device (520) to perform the device-to-device communication.

28. The controller device (500) as recited in claim 25, wherein the radio resources allocated according to the resource allocation message (720) are determined by the processor (502) according to a measurement result obtained through performing a measurement process.

29. The controller device (500) as recited in claim 28, wherein the processor (502) is configured to allocate measurement information comprising a reference signal to the first mobile device (510) and the second mobile device (520), such that the first mobile device (510) transmits the reference signal to the second mobile device (520) according to the measurement information, and that the second mobile device (520) receives the reference signal according to the measurement information and determines the measurement result according to the received reference signal, the measurement result comprising channel quality, pathloss, and timing advance between the first and second mobile devices (510, 520), the processor (502) being configured to receive the measurement result reported by the second mobile device (520).

30. The controller device (500) as recited in claim 29, wherein the measurement information further comprises the device-to-device identification code.

31. The controller device (500) as recited in claim 25, wherein the processor (502) is configured to transmit a control message before transmitting the resource allocation message (720), so as to inform the first and second mobile devices (510, 520) that the controller device (500) is about to transmit the resource allocation message (720).

32. The controller device (500) as recited in claim 31, wherein the control message further comprises the device-to-device identification code.

33. A mobile device (510) comprising:
a transceiver (514) configured to transmit and receive radio signals; and
a processor (512) coupled to the transceiver (514) and configured to search for a resource allocation message (720) in a control channel (712) by using a device-to-device identification code, wherein the resource allocation message (720) is transmitted by a controller device (500), the device-to-device identification code is an identification code of the mobile device (510) or an identification code of another mobile device (520), the mobile device (510) is a transmitting end of a device-to-device communication, the another mobile device (520) is a receiving end of the device-to-device communication, and the processor (512) is configured to directly transmit data (730) to the another mobile device (520) according to the resource allocation message (720).

34. The mobile device (510) as recited in claim 33, wherein the resource allocation message (720) comprises an indicator indicating that the resource allocation message (720) refers to resource allocation for the device-to-device communication or for normal uplink/downlink communication.

35. The mobile device (510) as recited in claim 33, wherein radio resources allocated according to the resource allocation message (720) are determined by the controller device (500) according to a measurement result obtained through performing a measurement process.

36. The mobile device (510) as recited in claim 35, wherein the processor (512) is configured to receive measurement information allocated by the controller device (500), the measurement information comprises a reference signal, and the processor (512) is configured to transmit the reference signal to the another mobile device (520) according to the measurement information, so as to measure channel quality, pathloss, and timing advance between the mobile device (510) and the another mobile device (520).

37. The mobile device (510) as recited in claim 36, wherein the measurement information further comprises the device-to-device identification code.

38. The mobile device (510) as recited in claim 33, wherein the processor (512) is configured to receive a control message from the controller device (500) before the processor (512) receives the resource allocation message (720), and the control message indicates that the controller device (500) is about to transmit the resource allocation message (720).

39. The mobile device (510) as recited in claim 38, wherein the control message further comprises the device-to-device identification code.

40. A mobile device (520) comprising:
a transceiver (524) configured to transmit and receive radio signals; and
a processor (522) coupled to the transceiver (524) and configured to search for a resource allocation message (720) in a control channel (712) by using a device-to-device identification code, wherein the resource allocation message (720) is transmitted by a controller device (500), the device-to-device identification code is an identification code of the mobile device (520) or an identification code of another mobile device (510), the another mobile device (510) is a transmitting end of a device-to-device communication, the mobile device (520) is a receiving end of the device-to-device communication, and the processor (522) is configured to receive data (730) directly transmitted from the another mobile device (510) according to the resource allocation message (720).

41. The mobile device (520) as recited in claim 40, wherein the resource allocation message (720) comprises an indicator indicating that the resource allocation message (720) refers to resource allocation for the device-to-device communication or for normal uplink/downlink communication.

42. The mobile device (520) as recited in claim 40, wherein the processor (522) is configured to perform normal downlink communication when the resource allocation message (720) requires the data (730) to be received from radio resources in a downlink subframe or in a downlink frequency band, and the processor (522) is configured to perform the device-to-device communication when the resource allocation message (720) requires the data (730) to be received from the radio resources in an uplink subframe or in an uplink frequency band.

43. The mobile device (520) as recited in claim 40, wherein radio resources allocated according to the resource allocation message (720) are determined by the controller device (500) according to a measurement result obtained through performing a measurement process.

44. The mobile device (520) as recited in claim 43, wherein the processor (522) is configured to receive measurement information allocated by the controller device (500), the measurement information comprises a reference signal, the processor (522) is configured to receive the reference signal from the another mobile device (510) according to the measurement information, determine the measurement result according to the received reference signal, and report the measurement result to the controller device (500), and the measurement result comprises channel quality, pathloss, and timing advance between the mobile device (520) and the another mobile device (510).

45. The mobile device (520) as recited in claim 44, wherein the measurement information further comprises the device-to-device identification code.

46. The mobile device (520) as recited in claim 40, wherein the processor (522) is configured to receive a control message from the controller device (500) before the processor (522) receives the resource allocation message (720), and the control message indicates that the controller device (500) is about to transmit the resource allocation message (720).

47. The mobile device (520) as recited in claim 46, wherein the control message further comprises the device-to-device identification code.

48. The mobile device (520) as recited in claim 40, wherein when the processor (522) observes that the resource allocation message (720) indicates implementation of the device-to-device communication, the processor (522) is configured to wait for a standard processing delay (740) of the another mobile device (510) and then receive the data (730) directly transmitted from the another mobile device (510) according to the resource allocation message (720).
